# EUROPÄISCHE PATENTSCHRIFT

(11) **EP 3 440 405 B1**
(45) Veröffentlichungstag und Bekanntmachung des Hinweises auf die Patenterteilung: **05.02.2020**
(21) Anmeldenummer: 17710254.8
(22) Anmeldetag: 13.03.2017
(51) Int. Cl.: F23J 1/02

(54) **VERBRENNUNGSANLAGE MIT ZUMINDEST EINEM STÖRKÖRPERENTFERNUNGSMITTEL IN DER FÖRDERSTRECKE DER VERBRENNUNGSRÜCKSTÄNDE**
COMBUSTION INSTALLATION HAVING AT LEAST ONE INTERFERING ELEMENT REMOVAL MEANS IN THE CONVEYOR LINE FOR THE COMBUSTION RESIDUES
DISPOSITIF DE COMBUSTION COMPORTANT AU MOINS UN MOYEN D'ÉLIMINATION DE CORPS INDÉSIRABLES DANS LE TRAJET DE TRANSPORT DES RÉSIDUS DE COMBUSTION

(30) Priorität: 06.04.2016 DE 102016106277
(43) Veröffentlichungstag der Anmeldung: 13.02.2019
(73) Patentinhaber: Clyde Bergemann Drycon GmbH, 46485 Wesel (DE)
(72) Erfinder: MORENO RUEDA, Rafael, 46519 Alpen (DE)
(74) Vertreter: Rössler, Matthias
(86) Internationale Anmeldenummer: PCT/EP2017/055759
(87) Internationale Veröffentlichungsnummer: WO 2017/174297

(56) Entgegenhaltungen:
- EP-A1- 2 876 371
- DE-C- 556 890
- US-A1- 2013 233 951

## Beschreibung

Die vorliegende Erfindung betrifft eine Verbrennungsanlage, insbesondere nach Art eines Kohlekraftwerks, eines Biomasseheizkraftwerks oder einer Abfallverbrennungsanlage. Solche Verbrennungsanlagen dienen insbesondere der Energieerzeugung, Wärmeerzeugung und/oder Abfallbeseitigung.

Bei Verbrennungsanlagen werden in einem Brennraum regelmäßig Brennstoffe, wie zum Beispiel Kohle, Biomasse und/oder Abfälle, verbrannt, deren Verbrennungsrückstände aus dem Brennraum der Verbrennungsanlage entfernt werden müssen. Hierzu weisen die Brennräume regelmäßig zumindest einen Auslass für die Verbrennungsrückstände auf, durch den die Verbrennungsrückstände einem Brecher zum Zerkleinern der Verbrennungsrückstände und einem Förderer zum Abtransport der Verbrennungsrückstände zugeführt werden.

Mit den Verbrennungsrückständen können aus dem Brennraum Störkörper mitgeführt werden, bei denen es sich beispielsweise um sehr große Klumpen der Verbrennungsrückstände und/oder große Metallteile handeln kann, die durch die Brecher nicht zerkleinerbar sind beziehungsweise nicht ausreichend zerkleinert wurden und zu einer Blockierung einer Förderstrecke der Verbrennungsrückstände oder des Förderers führen können. Diese Störkörper können durch ein dem Brecher nachfolgendes Gitter zurückgehalten und nach einer Abschaltung beziehungsweise nach einem Herunterfahren der Verbrennungsanlage entfernt werden, was gegebenenfalls erst nach einer mehrtägigen Abkühlphase der Verbrennungsanlage möglich ist. Ähnliches gilt für den Fall, dass Störkörper in Form von metallischen Körpern (zum Beispiel zerstörte und/oder verlorene Bestandteile von Komponenten der Verbrennungsanlage) auf dem Gitter der Brecher liegenbleiben. Diese können durch den Brecher nicht gebrochen werden und stören dadurch die Funktion des Brechers, solange der Störkörper nicht entfernt wird.

Aus der EP 2 876 371 A1, welche den Oberbegriff von Anspruch 1 offenbart, ist beispielsweise eine Vorrichtung zum Verbrennen von schwefelhaltigem Brennstoff in einem zirkulierenden Wirbelschichtkessel bekannt, bei der eine Bodenasche beispielsweise durch einen Sichter in einen groben Bodenascheteil und einen feinen Bodenascheteil trennbar ist. Der grobe Bodenascheteil ist über einen Austragskanal abführbar.

Die US 2013 233 951 A1 offenbart eine Verbrennungsanlage für ein Krematorium, bei der Metallrückstände in einer Verbrennungsasche durch eine Öffnung in einer Förderstrecke abscheidbar sind.

Aufgabe der Erfindung ist daher, die mit Bezug auf den Stand der Technik geschilderten Probleme zumindest teilweise zu lösen und insbesondere eine Verbrennungsanlage anzugeben, bei der Störkörper während des Betriebs der Verbrennungsanlage leicht entfernbar sind.

Diese Aufgaben werden gelöst mit einer Verbrennungsanlage gemäß den Merkmalen des unabhängigen Patentanspruchs. Weitere vorteilhafte Ausgestaltungen der Verbrennungsanlage sind in den abhängigen Patentansprüchen angegeben. Es ist darauf hinzuweisen, dass die in den abhängig formulierten Patentansprüchen einzeln aufgeführten Merkmale in technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Verbrennungsanlage weist einen Brennraum zum Verbrennen eines Brennstoffs auf, wobei Verbrennungsrückstände des in dem Brennraum verbrannten Brennstoffs über einen Auslass des Brennraums einem Brecher zum Zerkleinern der Verbrennungsrückstände zuführbar sind und wobei in einer Förderstrecke der Verbrennungsrückstände zumindest ein Störkörperentfernungsmittel angeordnet ist, mittels dem in den Verbrennungsrückständen mitgeführte und durch den Brecher nicht zerkleinerbare Störkörper über eine Störkörperentnahmeöffnung aus der Förderstrecke entfernbar sind, wobei das zumindest eine Störkörperentfernungsmittel zumindest ein erstes Brechelement des Brechers umfasst, wobei die Verbrennungsrückstände mit dem zumindest einen ersten Brechelement zerkleinerbar sind und wobei das zumindest eine erste Brechelement zur Freigabe der Störkörperentnahmeöffnung verstellbar ist.

Bei der hier vorgeschlagenen Verbrennungsanlage handelt es sich insbesondere um eine technische Anlage zur Stromerzeugung, Wärmeerzeugung und/oder Abfallbeseitigung. Die Verbrennungsanlage weist einen Brennraum zum Verbrennen eines Brennstoffs auf, bei dem es sich insbesondere um Kohle, Biomasse und/oder Abfälle handelt. Die Verbrennungsrückstände, insbesondere nach Art von Asche und/oder Schlacke, des in dem Brennraum verbrannten Brennstoffs sind über zumindest einen Auslass des Brennraums einem Brecher zum Zerkleinern der Verbrennungsrückstände zuführbar. Der Auslass des Brennraums ist insbesondere nach Art eine Öffnung und/oder eines Schachts am Boden des Brennraums ausgebildet.

Bei dem Brecher kann es sich beispielsweise um einen sogenannten Backenbrecher handeln. Der Brecher ist bevorzugt unter dem Brennraum der Verbrennungsanlage angeordnet. Durch den Brecher sind die Verbrennungsrückstände insbesondere derart zerkleinerbar, dass die zerkleinerten Verbrennungsrückstände anschließend mittels eines Förderers sicher abtransportiert werden können. Alternativ oder zusätzlich kann der Brecher dem Förderer auch nachgeschaltet sein. Der Förderer kann hierzu zumindest ein (umlaufendes) Förderband umfassen, das beispielsweise nach Art eines Plattenförderers ausgebildet ist. Das Förderband ist dabei insbesondere derart ausgebildet, dass es den hohen Temperaturen der Verbrennungsrückstände von beispielsweise 800 °C (Celsius) bis 1.300 °C widerstehen kann. Zu diesem Zweck ist das Förderband bevorzugt zumindest teilweise aus Metall ausgebildet. Alternativ kann der Förderer auch als Schneckenförderer ausgebildet sein. Neben dem Abtransport der Verbrennungsrückstände kann der Förderer auch zur Kühlung und/oder zur Verfestigung der Verbrennungsrückstände dienen. Weiterhin handelt es sich bei dem Förderer insbesondere um einen sogenannten Trockenförderer, der eine Kühlung und/oder Verfestigung der heißen Verbrennungsrückstände ohne ein Abschrecken der Verbrennungsrückstände mit Wasser ermöglicht. Alternativ kann es sich bei dem Förderer aber auch um einen sogenannten Nassförderer handeln.

In einer Förderstrecke der Verbrennungsrückstände von dem Brennraum zu dem Brecher oder Förderer ist zumindest ein Störkörperentfernungsmittel angeordnet, mittels dem in den Verbrennungsrückständen mitgeführte und durch den Brecher nicht zerkleinerbare Störkörper über eine Störkörperentnahmeöffnung entfernbar sind. Bei der Förderstrecke handelt es sich insbesondere um einen Bereich bzw. Pfad, entlang dessen die Verbrennungsrückstände gefördert werden. Die Förderstrecke ist zumindest teilweise (aus Sicherheitsgründen zumeist vollständig) durch Wände verschlossen bzw. umgeben und/oder nach Art einer Schurre, eines Schachts, eines Trichters oder einer Rutsche ausgebildet. Die Verbrennungsrückstände werden entlang der Förderstrecke insbesondere (auch) mittels Schwerkraft transportiert.

Bei dem Brecher handelt es sich insbesondere um einen sogenannten Backenbrecher mit einer ersten Brecherbacke als erstes Brechelement und einer zweiten Brecherbacke als zweites Brechelement. Das zumindest eine Störkörperentfernungsmittel umfasst zumindest das erste Brechelement des Brechers. Bei einem solchen Backenbrecher gelangen die Verbrennungsrückstände insbesondere durch einen Trichter in einen Mahlraum. Die Zerkleinerung der Verbrennungsrückstände erfolgt dann in einem insbesondere keilförmigen Schacht zwischen der ersten Brecherbacke und der zweiten Brecherbacke. Die erste Brecherbacke ist während der Zerkleinerung der Verbrennungsrückstände insbesondere fest oder unbeweglich angeordnet. Die zweite Brecherbacke ist während der Zerkleinerung der Verbrennungsrückstände beweglich angeordnet, sodass die Verbrennungsrückstände zwischen der ersten Brecherbacke und der zweiten Brecherbacke zerdrückt und nach unten gefördert werden. Es ist möglich, dass die erste Brecherbacke und die zweite Brecherbacke beweglich angeordnet sind. Sobald die Verbrennungsrückstände kleiner sind als ein eingestellter Mindestabstand zwischen dem ersten Brechelement und dem zweiten Brechelement, fallen die zerkleinerten Verbrennungsrückstände infolge der Schwerkraft durch den Brecher und können nachfolgend beispielsweise durch den Förderer abtransportiert werden. Zur Entfernung eines Störkörpers aus dem Brecher ist das zumindest eine erste Brechelement derart verstellbar, das heißt insbesondere horizontal und/oder vertikal verfahrbar, dass die Störkörperentnahmeöffnung freigegeben beziehungsweise geöffnet wird. Der Störkörper ist dadurch durch die Störkörperentnahmeöffnung aus dem Brecher entfernbar.

Bei den Störkörpern handelt es sich insbesondere um großvolumige (harte) Klumpen der Verbrennungsrückstände, die für eine Zerkleinerung durch den Brecher zu groß sind, und/oder um (große) Metallkörper, wie zum Beispiel in den Brennraum gefallene Lanzenrohre einer Reinigungsvorrichtung der Verbrennungsanlage. Die Störkörper können in zumindest einer Richtung insbesondere zumindest eine Erstreckung von mehr als 200 mm (Millimeter) oder sogar mehr als 400 mm aufweisen. Somit sind die Störkörper zu hart und/oder zu groß für eine Zerkleinerung durch den Brecher. Klarzustellen ist, dass es sich bei den Störkörpern somit insbesondere nicht um gasförmige Schadstoffe und/oder Stäube handelt, die den Brecher ohne weiteres passieren könnten.

Die Störkörper sind mittels des zumindest einen Störkörperentfernungsmittels, das an einer Position entlang der Förderstrecke in der Förderstrecke und/oder an der Förderstrecke der Verbrennungsrückstände angeordnet ist, über die Störkörperentnahmeöffnung aus der Förderstrecke der Verbrennungsrückstände entfernbar. Somit sind die Störkörper durch das zumindest eine Störkörperentfernungsmittel von den übrigen Verbrennungsrückständen trennbar, sodass die Störkörper und die Verbrennungsrückstände nachfolgend getrennt voneinander förderbar und/oder behandelbar sind.

Bei der Störkörperentnahmeöffnung handelt es sich insbesondere um eine (verschließbare und/oder zumindest teilweise blockierbare) Öffnung in einer die Förderstrecke zumindest teilweise umgebenden Wand, oder um eine Öffnung in dem Brecher, durch die die Störkörper getrennt von den Verbrennungsrückständen aus dem Brecher entfernbar sind. Die Störkörperentnahmeöffnung kann hierzu einen Durchmesser von mindestens 400 mm aufweisen. Die Störkörper werden daher nicht durch den Brecher zerkleinert und nicht durch den nachfolgenden Förderer abtransportiert, sondern separat von den übrigen Verbrennungsrückständen abtransportiert und/oder behandelt. Durch das zumindest eine Störkörperentfernungsmittel und die Störkörperentnahmeöffnung können die Störkörper daher während des normalen Betriebs der Verbrennungsanlage ("online") entfernt werden. Stillstände der Verbrennungsanlage, die zu hohen Kosten führen, können dadurch vermieden werden.

Zudem ist es vorteilhaft, wenn das zumindest eine Störkörperentfernungsmittel ein in der Förderstrecke der Verbrennungsrückstände zumindest teilweise angeordnetes erstes Gitter umfasst und wobei die Störkörper mittels des ersten Gitters von den Verbrennungsrückständen trennbar sind. Das erste Gitter kann insbesondere nach Art eines Siebs ausgebildet sein und/oder eine Vielzahl von Gitteröffnungen aufweisen, die beispielsweise einen Durchmesser von 100 mm bis 800 mm (Millimeter), bevorzugt 100 mm bis 400 mm oder besonders bevorzugt 100 mm bis 200 mm haben. Für das erste Gitter können in und/oder an der Förderstrecke beziehungsweise an einer Wand der Förderstrecke Stützelemente und/oder Befestigungselemente vorgesehen sein. Optional kann das erste Gitter mittels der Stützelemente und/oder Befestigungselemente, insbesondere parallel zu einer Ausdehnungsebene des ersten Gitters beziehungsweise in einer horizontalen Richtung, bewegbar sein. Dieses erste Gitter hat insbesondere die Funktion, die Störkörper in einer vorgegebene Position zu dem Störkörperentfernungsmittel und/oder der Störkörperentnahmeöffnung in der Förderstrecke zurückzuhalten, während die Verbrennungsrückstände weiter transportiert werden können.

Ebenfalls vorteilhaft ist es, wenn das erste Gitter zum Entfernen der Störkörper zumindest teilweise kippbar oder durch die Störkörperentnahmeöffnung verfahrbar ist. Das erste Gitter ist somit zumindest teilweise kippbar und/oder aus der Förderstrecke der Verbrennungsrückstände herausfahrbar. Weiterhin ist das erste Gitter in der Förderstrecke somit insbesondere nach Art einer Schublade ausgebildet. Hierdurch können die Störkörper außerhalb der Förderstrecke der Verbrennungsrückstände, das heißt in einem Bereich der Verbrennungsanlage, in dem Temperaturen von weniger als 60 °C herrschen und/oder der durch Personen während des normalen Betriebs der Verbrennungsanlage zugänglich ist, von dem ersten Gitter entfernt werden. Das erste Gitter kann den Querschnitt der Förderstrecke vollständig überspannen. Es ist möglich, dass das erste Gitter deutlich größer als der Querschnitt der Förderstrecke ausgeführt ist, so dass dieses auch im Zustand, wenn es (teilweise) herausgefahren wird, gleichzeitig noch (zumindest teilweise) den Querschnitt der Förderstrecke überdeckt. Im Falle eines kippbaren (bzw. verschwenkbaren) ersten Gitters können die Störkörper auf dem ersten Gitter insbesondere in Richtung der Störkörperentnahmeöffnung und/oder durch die Störkörperentnahmeöffnung rutschen. Das erste Gitter kippt/verschwenkt insbesondere aus einer horizontalen Lage in eine nach unten geneigte Lage, so dass sich auf dem ersten Gitter befindliche Störkörper (ggf. aufgrund der Schwerkraft zumindest teilweise selbstständig) hin zur Störkörperentnahmeöffnung bewegen können.

Weiterhin ist es vorteilhaft, wenn das zumindest eine Störkörperentfernungsmittel einen Schieber umfasst und wobei die Störkörper mit dem Schieber durch die Störkörperentnahmeöffnung entfernbar sind. Bei dem Schieber handelt es sich insbesondere um ein mechanisches Mittel, mit dem die Störkörper von dem ersten Gitter oder aus dem Brecher entfernt werden können.

Des Weiteren ist es vorteilhaft, wenn der Brecher ein zweites Brechelement aufweist, das beim Zerkleinern der Verbrennungsrückstände mit dem zumindest einen ersten Brechelement zusammenwirkt. Bei dem zweiten Brechelement handelt es sich insbesondere um die zweite Brecherbacke des Backenbrechers.

Besonders vorteilhaft ist es, wenn die Störkörper mit dem zweiten Brechelement durch die Störkörperentnahmeöffnung entfernbar sind. Hierzu ist das zweite Brechelement des Brechers insbesondere bewegbar, sodass die Störkörper durch die Störkörperentnahmeöffnung aus dem Brecher geschoben werden können. Das zweite Brechelement bewegt sich dazu insbesondere in einer horizontalen Richtung in Richtung der Störkörperentnahmeöffnung. Zu diesem Zweck kann das zweite Brechelement beispielsweise mit zumindest einem Hydraulikzylinder verbunden sein.

Weiterhin ist es vorteilhaft, wenn der Brecher zumindest ein zweites Gitter aufweist, durch das die Störkörper von den Verbrennungsrückständen trennbar sind. Das zumindest eine zweite Gitter ist insbesondere an einem Boden eines Raums angeordnet, der zwischen dem ersten Brechelement und dem zweiten Brechelement ausgebildet ist, und/oder ist der Fachwelt auch als sogenanntes "GRID" bekannt. Das zumindest eine zweite Gitter kann insbesondere ebenfalls nach Art eines Siebs ausgebildet sein und/oder eine Vielzahl von Gitteröffnungen aufweisen, die beispielsweise einen Durchmesser von 100 mm bis 800 mm (Millimeter), bevorzugt 100 mm bis 400 mm oder besonders bevorzugt 100 mm bis 200 mm haben.

Zudem ist es vorteilhaft, wenn entlang der Förderstrecke im Bereich des zumindest einen Störkörperentfernungsmittels zumindest eine Öffnung angeordnet ist. Bei dieser zumindest einen Öffnung kann es sich beispielsweise um eine sogenanntes "Poke Hole" handeln, durch das die Störkörper manuell, beispielsweise mittels eines mechanischen Hilfsmittels, durch die Störkörperentnahmeöffnung bewegt werden können. Über die Poke Holes kann bei Bedarf ein Störköper auch vorgebrochen werden, damit dieser besser durch die Störkörperentnahmeöffnung passt. Hierzu kann durch ein Poke Hole hindurch (zeitweise) ein Brechwerkzeug eingeführt und mit dem auf dem ersten Gitter befindlichen Störkörper in Kontakt gebracht werden. Die zumindest eine Öffnung ist insbesondere maximal 2 Meter von dem zumindest einen Störkörperentfernungsmittel entfernt angeordnet.

Weiterhin ist es vorteilhaft, wenn die Verbrennungsanlage einen mobilen Aufnahmebehälter zur Aufnahme der durch die Störkörperentnahmeöffnung entfernten Störkörper aufweist. Der Aufnahmebehälter kann hierzu beispielsweise Räder aufweisen und/oder mit einem Flurfördergerät, wie zum Beispiel einem Hubwagen oder Gabelstapler, bewegbar sein.

Weiterhin kann mindestens ein Erfassungsmittel vorgesehen sein, mit dem festgestellt werden kann, ob bzw. welche Störkörper aktuell an dem Störkörperentfernungsmittel vorliegen. Es kann ein Erfassungsmittel zur Ermittlung des Gewichts der Störkörper vorgesehen sein. Es kann ein optisches Erfassungsmittel zur visuellen Überwachung der Förderstrecke im Bereich des Störkörperentfernungsmittels vorgesehen sein. Das mindestens eine Erfassungsmittel kann mit einer Steuerung verbunden sein, die ein Signal an einen Leitstand abgeben und/oder den Betrieb des Störkörperentfernungsmittels bzw. der Störkörperentnahmeöffnung initiieren / beenden kann.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine nicht beanspruchte erste Ausführungsvariante der Verbrennungsanlage mit einer geschlossenen Störkörperentnahmeöffnung;
- Fig. 2:: die nicht beanspruchte erste Ausführungsvariante der Verbrennungsanlage mit einer geöffneten Störkörperentnahmeöffnung;
- Fig. 3:: eine nicht beanspruchte zweite Ausführungsvariante der Verbrennungsanlage mit einer geöffneten Störkörperentnahmeöffnung;
- Fig. 4:: eine erfindungsgemäße dritte Ausführungsvariante der Verbrennungsanlage mit einer geschlossenen Störkörperentnahmeöffnung; und
- Fig. 5:: die erfindungsgemäße dritte Ausführungsvariante der Verbrennungsanlage mit einer geöffneten Störkörperentnahmeöffnung.

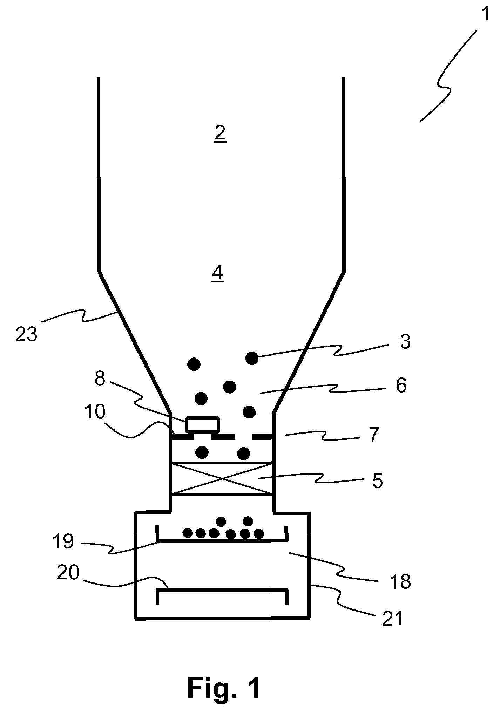

Die Fig. 1 zeigt eine nicht beanspruchte erste Ausführungsvariante einer Verbrennungsanlage 1 mit einem Brennraum 2, in dem ein hier nicht gezeigter Brennstoff verbrennbar ist. Die durch die Verbrennung des Brennstoffs in dem Brennraum 2 entstehenden Verbrennungsrückstände 3 sind über einen Auslass 4 des Brennraums 2 entlang einer Förderstrecke 6, einem Brecher 5 und einem Förderer 18 zuführbar. Die Förderung der Verbrennungsrückstände 3 entlang der Förderstrecke 6 erfolgt mit Hilfe der Schwerkraft. Die Verbrennungsrückstände 3 werden durch den Brecher 5 zerkleinert und anschließend durch den Förderer 18 abtransportiert. Der Förderer 18 weist ein umlaufendes Förderband mit einem Obertrum 19 und einem Untertrum 20 auf. Der Förderer ist zumindest teilweise durch ein Gehäuse 21 umgeben und insbesondere im Wesentlichen gasdicht mit dem Brennraum 2 verbunden. Mit den Verbrennungsrückständen 3 werden Störkörper 8 mitgeführt, die durch den Brecher 5 aufgrund ihrer Härte und/oder Größe nicht zerkleinerbar sind. Die Verbrennungsanlage 1 weist daher ein Störkörperentfernungsmittel 7 auf, das bei der hier gezeigten nicht beanspruchten ersten Ausführungsvariante als erstes Gitter 10 ausgebildet ist, das in der Förderstrecke 6 der Verbrennungsrückstände 3 zwischen dem Auslass 4 des Brennraums 2 und dem Brecher 5 angeordnet ist.

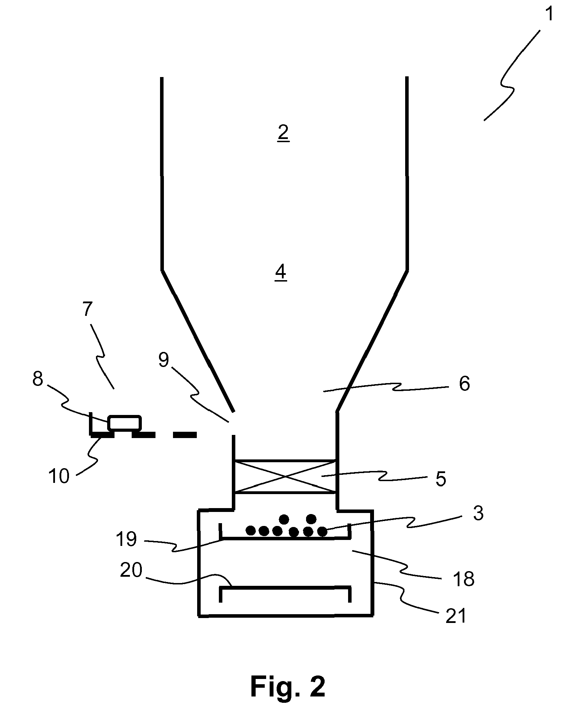

Wie in der Fig. 2 gezeigt, ist das Gitter 10 des Störkörperentfernungsmittels 7 seitlich durch eine Störkörperentnahmeöffnung 9, die in einer die Förderstrecke 6 umgebenden Wand 23 ausgebildet ist, aus der Förderstrecke 6 der Verbrennungsrückstände 3 herausfahrbar. In der herausgefahrenen Position können die durch das erste Gitter 10 aus den Verbrennungsrückständen 3 herausgefilterten Störkörper 8 entfernt werden, ohne dass die Verbrennungsanlage stillgelegt oder heruntergefahren werden muss.

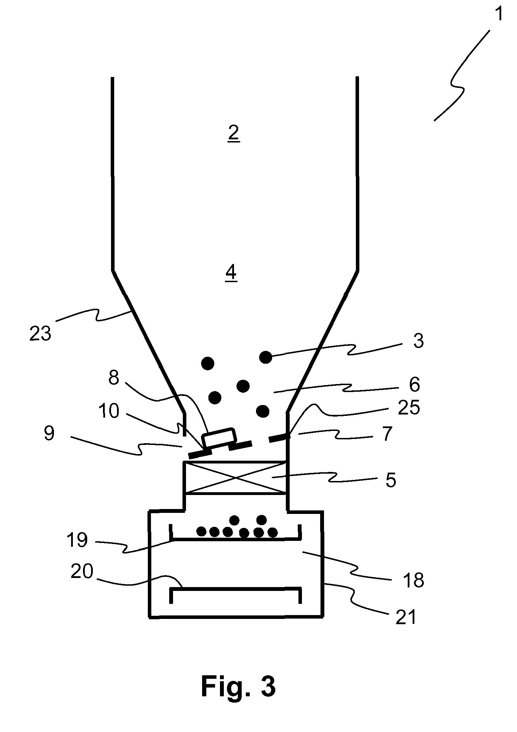

Die Fig. 3 zeigt eine nicht beanspruchte zweite Ausführungsvariante einer Verbrennungsanlage 1, die sich von der nicht beanspruchten ersten Ausführungsvariante der Verbrennungsanlage 1 dadurch unterscheidet, dass das Störkörperentfernungsmittel 7 ein um eine Schwenkachse 25 kippbares oder schwenkbares erstes Gitter 10 aufweist. Hierdurch bildet das erste Gitter 10 eine schiefe Ebene, sodass die Störkörper 8 durch die hier geöffnete Störkörperentnahmeöffnung 9 aus der Förderstrecke 6 rutschen können. Die Störkörperentnahmeöffnung 9 kann durch eine hier nicht gezeigte Klappe verschlossen werden.

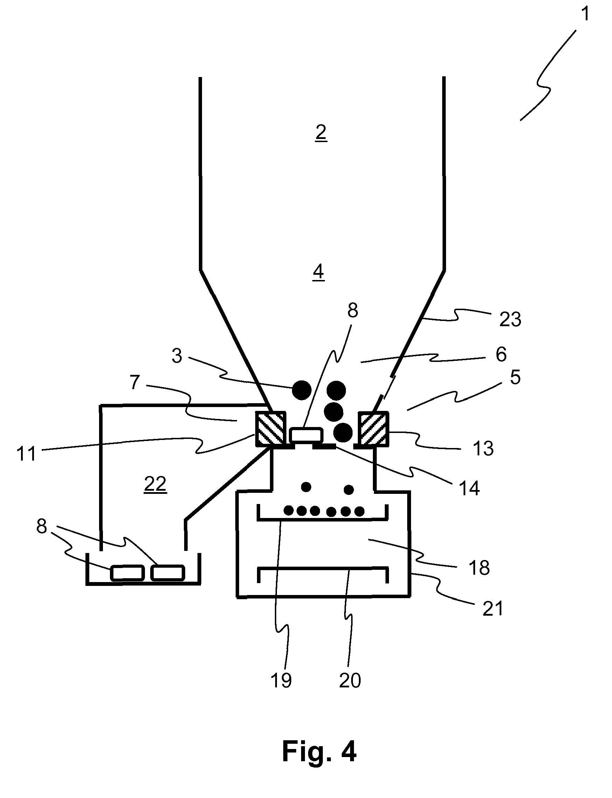

Die Fig. 4 zeigt eine erfindungsgemäße dritte Ausführungsvariante einer Verbrennungsanlage 1, die sich von der nicht beanspruchten ersten und zweiten Ausführungsvariante der Verbrennungsanlage 1 dadurch unterscheidet, dass das Störkörperentfernungsmittel 7 ein erstes Brechelement 11 des Brechers 5 umfasst. Der Brecher 5 ist hier nach Art eines Backenbrechers ausgebildet und umfasst eine erste Brecherbacke als erstes Brechelement 11 und eine zweite Brecherbacke als zweites Brechelement 13, zwischen denen die Verbrennungsrückstände 3 zerkleinerbar sind. Weiterhin weist der Brecher 5 ein zweites Gitter 14 auf, das direkt unterhalb des ersten Brechelements 11 und des zweiten Brechelements 13 angeordnet ist und das die Störkörper 8 von den übrigen Verbrennungsrückständen 3 trennt. Der Brecher 5 wird hier in einer normalen Betriebsstellung gezeigt, in der sich das erste Brechelement 11 in einer arretierten Position befindet, das zweite Brechelement 13 beispielsweise mittels einer hier nicht gezeigten Exzenterwelle, eines Hydraulikzylinders und/oder durch einen einfachen Vortrieb in Schwingung versetzbar ist und in der die Verbrennungsrückstände 3 durch den Brecher 5 zerkleinerbar sind. Klarzustellen ist hier, dass die zweite Ausführungsvariante der Verbrennungsanlage 1 kein erstes Gitter 10 in der Förderstrecke 6 der Verbrennungsrückstände 3 aufweist, auch wenn dies grundsätzlich möglich ist.

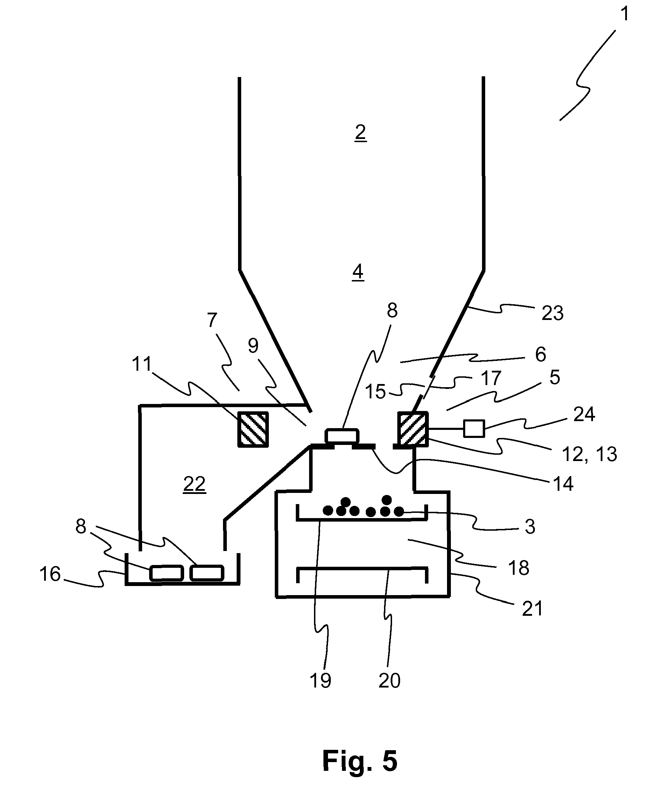

Die Fig. 5 zeigt die erfindungsgemäße dritte Ausführungsvariante der Verbrennungsanlage 1, nachdem eine Störkörperentnahmeöffnung 9 durch seitliches Verstellen beziehungsweise Verschieben des ersten Brechelements 11 in einer horizontalen Richtung freigegeben wurde, sodass die Störkörper 8 durch das zweite Brechelement 13, das hier nach Art eines Schiebers 12 ausgebildet ist, von dem zweiten Gitter 14 aus dem Brecher 5 entfernbar ist. Klarzustellen ist, dass das erste Brechelement 11 auch in einer vertikalen Richtung und/oder verschwenkbar ausgebildet sein kann. Das zweite Brechelement 13 ist durch zumindest einen Hydraulikzylinder 24 entlang des zweiten Gitters 14 in Richtung der Störkörperentnahmeöffnung 9 verstellbar, sodass die Störkörper 8 durch die Störkörperentnahmeöffnung 9 und eine Fallschurre 22 in einen Aufnahmebehälter 16 fallen. Sowohl die Fallschurre 22 als auch der Aufnahmebehälter 16 sind mobil ausgestaltet. Hierzu ist die Fallschurre 22 an dem Aufnahmebehälter 16 befestigt und mit diesem bewegbar. Anschließend fahren das erste Brechelement 11 und das zweite Brechelement 13 wieder in ihre Ausgangsposition beziehungsweise Arretierposition zurück. Oberhalb des Brechers 5 ist in der Wand 23 in einem Schacht unterhalb des Auslasses 4 des Brennraums 2 eine Öffnung 15 angeordnet, die hier mittels einer Klappe 17 verschlossen ist. Durch die Öffnung 15 können die Störkörper 8 auf dem zweiten Gitter 14 manuell, beispielsweise mittels eines mechanischen Hilfsmittels, in Richtung der Störkörperentnahmeöffnung 9 bewegt werden.

Die vorliegende Erfindung zeichnet sich insbesondere dadurch aus, dass Störkörper im normalen Betrieb einer Verbrennungsanlage entfernt werden können, ohne dass die Verbrennungsanlage stillgelegt werden muss.

### Bezugszeichenliste

- 1: Verbrennungsanlage
- 2: Brennraum
- 3: Verbrennungsrückstände
- 4: Auslass
- 5: Brecher
- 6: Förderstrecke
- 7: Störkörperentfernungsmittel
- 8: Störkörper
- 9: Störkörperentnahmeöffnung
- 10: erstes Gitter
- 11: erstes Brechelement
- 12: Schieber
- 13: zweites Brechelement
- 14: zweites Gitter
- 15: Öffnung
- 16: Aufnahmebehälter
- 17: Klappe
- 18: Förderer
- 19: Obertrum
- 20: Untertrum
- 21: Gehäuse
- 22: Fallschure
- 23: Wand
- 24: Hydraulikzylinder
- 25: Schwenkachse

## Patentansprüche

1. Verbrennungsanlage (1), aufweisend einen Brennraum (2) zum Verbrennen eines Brennstoffs, wobei Verbrennungsrückstände (3) des in dem Brennraum (2) verbrannten Brennstoffs über einen Auslass (4) des Brennraums (2) einem Brecher (5) zum Zerkleinern der Verbrennungsrückstände (3) zuführbar sind und wobei in einer Förderstrecke (6) der Verbrennungsrückstände (3) zumindest ein Störkörperentfernungsmittel (7) angeordnet ist, mittels dem in den Verbrennungsrückständen (3) mitgeführte und durch den Brecher (5) nicht zerkleinerbare Störkörper (8) über eine Störkörperentnahmeöffnung (9) aus der Förderstrecke (6) entfernbar sind, **dadurch gekennzeichnet, dass** das zumindest eine Störkörperentfernungsmittel (7) zumindest ein erstes Brechelement (11) des Brechers (5) umfasst, wobei die Verbrennungsrückstände (3) mit dem zumindest einen ersten Brechelement (11) zerkleinerbar sind und wobei das zumindest eine erste Brechelement (11) zur Freigabe der Störkörperentnahmeöffnung (9) verstellbar ist.

2. Verbrennungsanlage (1) nach Patentanspruch 1, wobei das zumindest eine Störkörperentfernungsmittel (7) ein in der Förderstrecke (6) der Verbrennungsrückstände (3) zumindest teilweise angeordnetes erstes Gitter (10) umfasst und wobei die Störkörper (8) mittels des ersten Gitters (10) von den Verbrennungsrückständen (3) trennbar sind.

3. Verbrennungsanlage (1) nach Patentanspruch 2, wobei das erste Gitter (10) zum Entfernen der Störkörper (8) zumindest teilweise kippbar oder durch die Störkörperentnahmeöffnung (9) verfahrbar ist.

4. Verbrennungsanlage (1) nach einem der vorhergehenden Patentansprüche, wobei das zumindest eine Störkörperentfernungsmittel (7) einen Schieber (12) umfasst und wobei die Störkörper (8) mit dem Schieber (12) durch die Störkörperentnahmeöffnung (9) entfernbar sind.

5. Verbrennungsanlage (1) nach einem der Patentansprüche 1 oder 4, wobei der Brecher (5) ein zweites Brechelement (13) aufweist, das beim Zerkleinern der Verbrennungsrückstände (3) mit dem zumindest einen ersten Brechelement (11) zusammenwirkt.

6. Verbrennungsanlage (1) nach Patentanspruch 5, wobei die Störkörper (8) mit dem zweiten Brechelement (13) durch die Störkörperentnahmeöffnung (9) entfernbar sind.

7. Verbrennungsanlage (1) nach einem der vorhergehenden Patentansprüche, wobei der Brecher (5) zumindest ein zweites Gitter (14) aufweist, durch das die Störkörper (8) von den Verbrennungsrückständen (3) trennbar sind.

8. Verbrennungsanlage (1) nach einem der vorhergehenden Patentansprüche, wobei entlang der Förderstrecke (6) im Bereich des zumindest einen Störkörperentfernungsmittels (7) zumindest eine Öffnung (15) angeordnet ist.

9. Verbrennungsanlage (1) nach einem der vorhergehenden Patentansprüche, aufweisend einen mobilen Aufnahmebehälter (16) zur Aufnahme der durch die Störkörperentnahmeöffnung (9) entfernten Störkörper (8).

## Claims

1. Combustion plant (1), having a combustion chamber (2) for burning a fuel, wherein combustion residues (3) of the fuel burnt in the combustion chamber (2) can be fed via an outlet (4) of the combustion chamber (2) to a crusher (5) for comminuting the combustion residues (3), and wherein at least one disturbance body remover (7) is arranged in a conveying path (6) of the combustion residues (3), by means of said at least one disturbance body remover (7) disturbance bodies (8) being carried in the combustion residues (3) and cannot be comminuted by the crusher (5) are removable from the conveying path (6) via a disturbance body removal opening (9), **characterized in that** the at least one disturbance body remover (7) having at least one first crushing element (11) of the crusher (5), wherein the combustion residues (3) are crushable with the at least one first crushing element (11) and wherein the at least one first crushing element (11) is movable to open the disturbance body remover opening (9).

2. Combustion plant (1) according to claim 1, wherein the at least one disturbance body remover (7) comprises a first grid (10) arranged at least partially in the conveying path (6) of the combustion residues (3), and wherein the disturbance bodies (8) can be separated from the combustion residues (3) by means of the first grid (10).

3. Combustion plant (1) according to claim 2, wherein the first grid (10) for removing the disturbance bodies (8) is at least partially tiltable or movable through the disturbance body removal opening (9).

4. Combustion plant (1) according to one of the preceding claims, wherein the at least one disturbance body removal means (7) comprises a pusher (12) and wherein the disturbance bodies (8) are removable by the pusher (12) through the disturbance body removal opening (9).

5. Combustion plant (1) according to one of claims 1 or 4, wherein the crusher (5) comprises a second crushing element (13) which cooperates with the at least one first crushing element (11) when crushing the combustion residues (3).

6. Combustion plant (1) according to claim 5, wherein the disturbance bodies (8) are removable by the second crushing element (13) through the disturbance body removal opening (9).

7. Combustion plant (1) according to one of the preceding claims, wherein the crusher (5) has at least one second grid (14) through which the disturbance bodies (8) can be separated from the combustion residues (3).

8. Combustion plant (1) according to one of the preceding claims, wherein at least one opening (15) is arranged along the conveying path (6) in the region of the at least one disturbance body remover (7).

9. Combustion plant (1) according to one of the preceding claims, having a mobile receptacle (16) for receiving the disturbance bodies (8) removed through the disturbance body removal opening (9).

## Revendications

1. Dispositif de combustion (1), comportant une chambre de combustion (2) pour la combustion d'un combustible, les résidus de combustion (3) du combustible brûlé dans la chambre de combustion (2) pouvant être amenés à un broyeur (5) via une sortie (4) de la chambre de combustion (2) pour réduire la taille des résidus de combustion (3) et au moins un moyen d'élimination de corps indésirables (7) étant disposé dans un trajet de transport (6) des résidus de combustion (3), ledit moyen permettant d'écarter du trajet de transport (6) les corps indésirables (8) amenés avec les résidus de combustion (3) et n'ayant pas pu être réduits en taille par le broyeur (5) en les conduisant à travers une ouverture de retrait de corps indésirables (9), **caractérisé en ce que** l'au moins un moyen d'élimination de corps indésirables (7) comprend au moins un premier élément broyeur (11) du broyeur (5), les résidus de combustion (3) pouvant être réduits en taille à l'aide d'au moins un premier élément broyeur (11) et l'au moins un premier élément broyeur (11) pouvant être déplacé pour libérer l'ouverture de retrait de corps indésirables (9).

2. Dispositif de combustion (1) selon la revendication 1, l'au moins un moyen d'élimination de corps indésirables (7) comprenant une première grille (10) au moins en partie disposée dans le trajet de transport (6) des résidus de combustion (3) et les corps indésirables (8) pouvant être séparés des résidus de combustion (3) à l'aide de la première grille (10).

3. Dispositif de combustion (1) selon la revendication 2, la première grille (10) pouvant basculer au moins en partie pour retirer les corps indésirables (8) ou pouvant être amenée à travers l'ouverture de retrait de corps indésirables (9).

4. Dispositif de combustion (1) selon l'une quelconque des revendications précédentes, l'au moins un moyen d'élimination de corps indésirables (7) comprenant un poussoir (12) et les corps indésirables (8) pouvant être écartés via l'ouverture de retrait de corps indésirables (9) à l'aide du poussoir (12).

5. Dispositif de combustion (1) selon l'une quelconque des revendications 1 ou 4, le broyeur (5) comportant un deuxième élément broyeur (13) interagissant avec l'au moins un premier élément broyeur (11) lors de la réduction de taille des résidus de combustion (3).

6. Dispositif de combustion (1) selon la revendication 5, les corps indésirables (8) pouvant être écartés via l'ouverture de retrait de corps indésirables (9) à l'aide du deuxième élément broyeur (13).

7. Dispositif de combustion (1) selon l'une quelconque des revendications précédentes, le broyeur (5) comportant au moins une deuxième grille (14) à travers laquelle les corps indésirables (8) peuvent être séparés des résidus de combustion (3).

8. Dispositif de combustion (1) selon l'une quelconque des revendications précédentes, au moins une ouverture (15) étant disposée le long du trajet de transport (6), dans la région de l'au moins un moyen d'élimination de corps indésirables (7).

9. Dispositif de combustion (1) selon l'une quelconque des revendications précédentes, comportant un bac de réception (16) mobile conçu pour recevoir les corps indésirables (8) écartés via l'ouverture de retrait de corps indésirables (9).
